# EUROPEAN PATENT APPLICATION

(11) **EP 1 718 069 A2**
(43) Date of publication of application: **02.11.2006**
(21) Application number: 06252116.6
(22) Date of filing: 18.04.2006
(51) Int. Cl.: H04N 5/445

(54) **Adjustment effect confirmation function and electronic apparatus provided therewith**

(30) Priority: 28.04.2005 JP 2005132435
(71) Applicant: ORION ELECTRIC CO., Ltd., Fukui 915-8555 (JP)
(72) Inventor: Hayashi, Koichiro c/o Orion Electric Co., Ltd., Echizen-city Fukui 915-8555 (JP)
(74) Representative: Paget, Hugh Charles Edward

(57) **Abstract**

The present invention provides an electronic apparatus which allows a user to easily compare image quality before and after an adjustment. When settings are made, a screen is divided, a state before the adjustment is displayed on a divided screen A and the same state is also displayed on divided screens B and C. Set values can be changed on the divided screens B and C independently and by simultaneously comparing the screens before and after the adjustment, the user can easily adjust image quality.

## Description

### BACKGROUND OF THE INVENTION

### Field of the Invention

The present invention relates to an adjustment effect confirmation function provided for an electronic apparatus such as a television receiver which has a display function or a video/audio signal output section for an outside display device, which displays a screen divided into multiple screens so that various adjustments of contrast and brightness or the like are made on the respective screens and a comparison is made between the respective screens, allowing easy confirmation of adjustment states, and the electronic apparatus provided therewith.

### Description of the Related Art

Conventionally, a method of dividing a display screen to display different channels together with a program currently being viewed on an electronic apparatus handling images such as a television receiver is disclosed. Such a method is designed to allow adjustments of image quality such as contrast, hue, and brightness to be made according to a user's preferences using operation keys or a remote control device provided for the electronic apparatus.

For example, Japanese Patent Laid-Open Publication No. 2002-218350 (Patent Document 1) and Japanese Patent Laid-Open Publication No. 2004-186927 (Patent Document 2) disclose a method allowing a user to adjust image quality by dividing a screen into two portions, one displaying a state before an adjustment, the other used as an adjustment screen. For example, when adjusting brightness assuming the value of brightness currently set is 50 according to this method, a brightness adjustment section is displayed, one screen displays an image assuming the brightness to be 50 or an image based on initial set values and the other screen displays an image according to brightness which is variable by the adjustment section. These methods allow the user to easily compare image quality before adj ustment or based on the initial set values with image quality under adjustment.

However, according to the conventional method when adjusting image quality with multiple screens, a one-to-one comparison can be made only between images before and after adjustment and even when an attempt is made to adjust image quality and make a comparison according to a plurality of setting items, the comparison can be made for only one setting item at a time, such an adjustment takes much time and trouble, and the image quality actually being viewed is image quality after a plurality of setting items are adjusted, which results in a disadvantage that the user cannot make a comparison according to the actual image quality.

### SUMMARY OF THE INVENTION

The present invention has been implemented in view of the above described problems and it is an object of the present invention to provide an adjustment effect confirmation function which divides a screen into at least two multiple portions, making it possible to confirm image quality with the plurality of divided screens, with one divided screen making various screen adjustments independently, allowing a comparison of image quality in a state of the image in a final view and an electronic apparatus provided therewith.

The adjustment effect confirmation function according to a first aspect of the present invention for an electronic apparatus provided with an input signal processing section which processes an inputted video/audio signal, a control/judgment section which adjusts various settings to the video/audio signal processed by the input signal processing section, a display section which outputs a video/audio signal adjusted by the control/judgment section and a storage section which stores various adjustment data, comprises a division instruction section which at least gives an instruction for dividing a display screen through a user' s operation, a division control section which divides the display screen into a number of divided screens specified by the instruction section and a screen control section which controls the division control section and the display section, wherein image quality of each divided screen selected by the division control section can be adjusted by the control/judgment section.

According to the configuration of the first aspect of the present invention, when, for example, a video/audio signal is inputted by a tuner which receives a broadcast signal or the input signal processing section which decodes data stored in the storage medium and image quality of the video/audio signal is adjusted, the user performs an operation of dividing the screen into multiple screens, the control/judgment section instructs the division instruction section to divide the screen based on the operation and the division instruction section instructs the division control section to divide the screen. At the same time, the control/judgment section controls the screen control section so as to display an image obtained by decoding the video/audio signal on each of the divided screens and can display the image divided into multiple screens on the display section. By adjusting the image quality of each divided image, the image quality can be easily compared.

The control/j udgment section according to a second aspect of the present invention can adjust different items for a plurality of video/audio signals outputted to a divided screen which is displayed on the display section for each video/audio signal and reflects the adjustments in the video/audio signal outputted at any time.

According to the configuration of the second aspect of the present invention, when adjusting image quality of an image displayed on the multiple screens, it is possible to select an adjustment item and make an adjustment independently for each screen and reflect the adjustment in the image displayed at any time.

The electronic apparatus according to a third aspect of the present invention comprises the adjustment effect confirmation function according to the first or second aspect of the present invention.

According to the configuration of the third aspect of the present invention, the electronic apparatus is provided with the adjustment effect confirmation function, and can thereby provide a multi-screen display, adjust image quality for each screen, make an adjustment while comparing a plurality of screens and allow the user to set the image to desired image quality.

### BRIEF DESCRIPTION OF THE DRAWINGS

FIG. 1 is a block diagram of an electronic apparatus showing Embodiment 1 of the present invention;
FIG. 2 is an explanatory view showing a screen adjustment menu according to Embodiment 1 of the present invention;
FIG. 3 shows a screen which is divided into multiple screens for adjustments according to Embodiment 1 of the present invention; (A) is an explanatory view showing a screen immediately after the division, (B) is an explanatory view showing the screen when the adjustment is completed;
FIG. 4 is a flow chart showing the operation of dividing a screen into multiple portions and adjusting the screens according to Embodiment 1 of the present invention; and
FIG. 5 is a screen which is divided into multiple screens for adjustments according to Embodiment 2 of the present invention; (A) is an explanatory view showing the divided screens, (B) is an explanatory view showing a setting item menu displayed when one divided screen is selected.

### DETAILED DESCRIPTION OF THE PREFERRED EMBODIMENTS

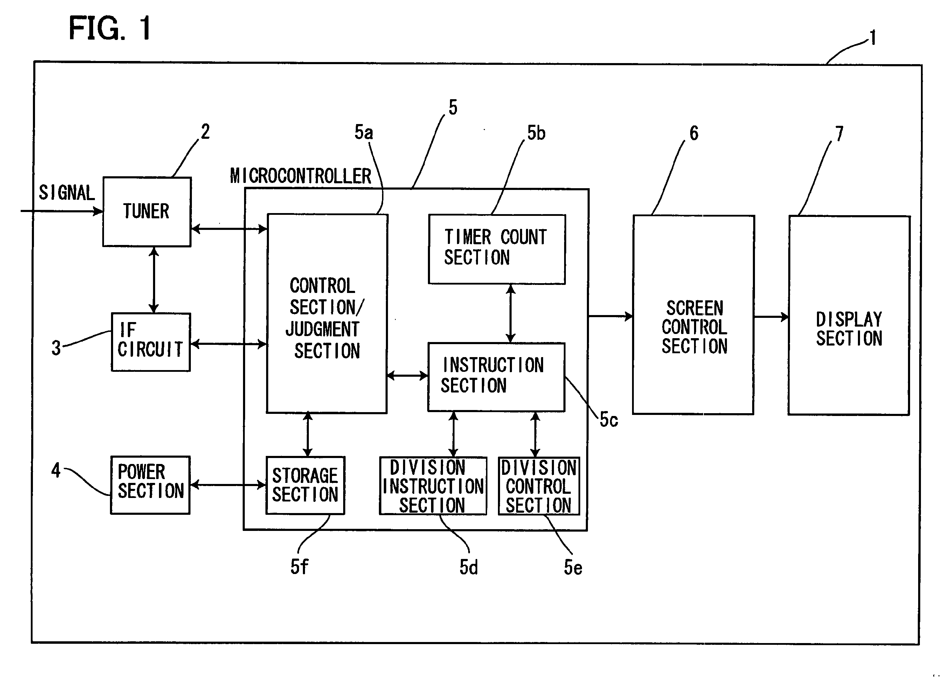

Hereinafter, as the best mode for implementing the present invention, embodiments will be explained with reference to FIG. 1 to FIG. 5. It goes without saying that the present invention is also easily applicable to modes other than those explained in the embodiments within a range not departing from the essence of the present invention.

### [Embodiment 1]

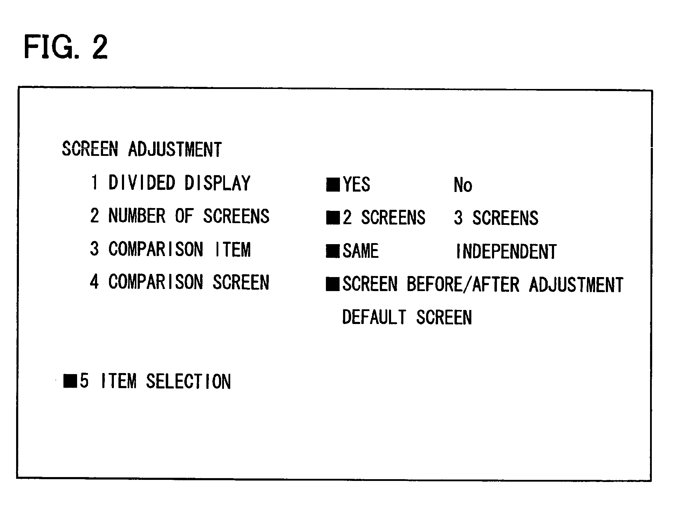

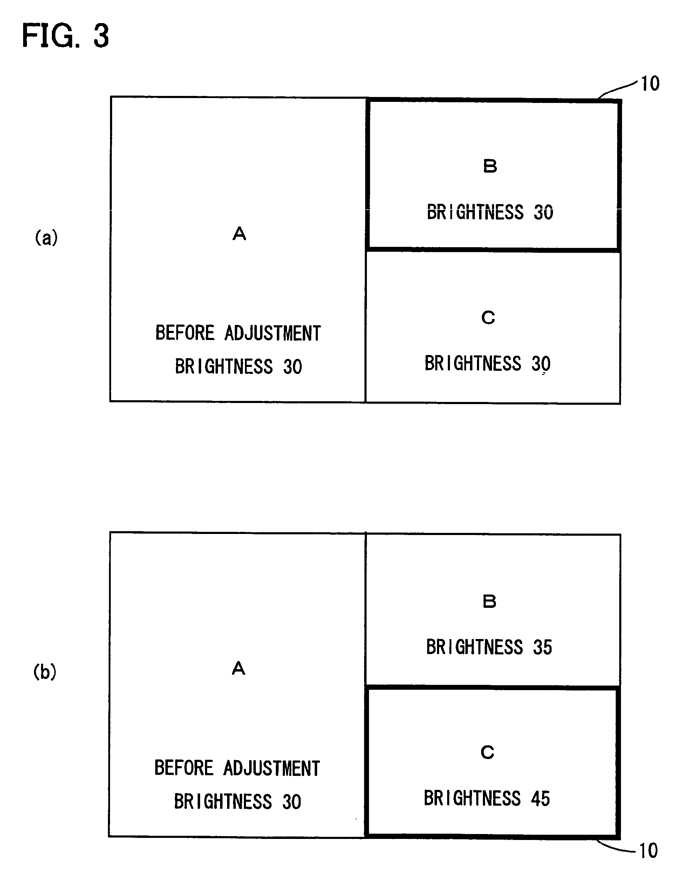

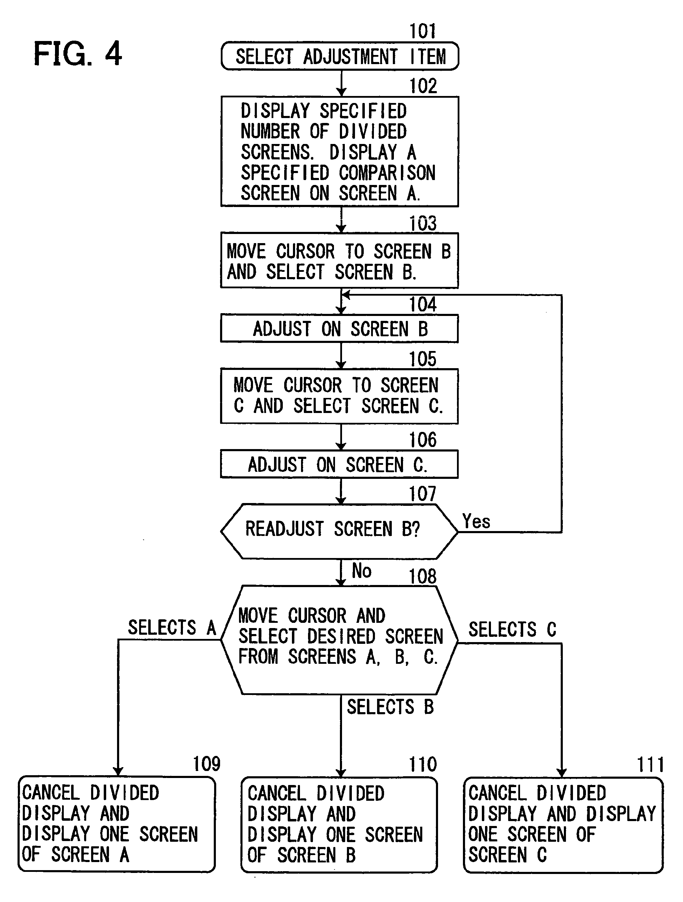

FIG. 1 to FIG. 4 show Embodiment 1 of the present invention, FIG. 1 is a block diagram showing the configuration of a television receiver which is an electronic apparatus of this embodiment. FIG. 2 is an explanatory view showing a screen before actually adjusting image quality and FIG. 3 is an explanatory view showing the state of the screen during an adjustment. FIG. 4 is a flow chart showing the operation of the electronic apparatus during an adjustment.

The configuration of the television receiver which is an electronic apparatus of Embodiment 1 will be explained using FIG. 1. Reference numeral 1 denotes a television receiver which is an electronic apparatus of this embodiment. Reference numeral 2 denotes a tuner which receives a broadcast radio wave and makes a channel selection. Reference numeral 3 denotes an IF circuit which amplifies an intermediate frequency of the broadcast radio wave received by the tuner and 4 denotes a power section which supplies power to the electronic apparatus. Reference numeral 5 denotes a microcontroller which controls the tuner 2, IF circuit 3, power section 4 and a screen control section which will be described later. The microcontroller 5 is provided with a control/judgment section 5a, a timer count section 5b, an instruction section 5c, a division instruction section 5d, a division control section 5e and a storage section 5f which is a non-volatile memory storing operation settings of the microcontroller. Reference numeral 6 denotes a screen control section and 7 denotes a display section controlled by the screen control section. The storage section 5f is a storage medium which stores default adjustment data, adjustment items, operating adjustment data, adjustment data after adjustment, user information and other information.

Next, a screen transfer to an adjustment screen when actually adjusting a screen and adjustment method will be explained using FIGS. 2 and 3. A display screen when a screen adjustment is selected from the menu screen is shown in FIG. 2. "1 Divided display" urges the user to select whether or not to perform a divided display. When the screen is divided, the function of the present invention is executed and when the screen is not divided, an adjustment is made with an individual screen which has been used conventionally. The following items are selected only when the screen is divided. In "2 Number of screens", the number of divided screens is selected from 2 screens or 3 screens. In "3 Comparison item", it is selected whether an adjustment is made for the same item on each of the divided screens or various items are adjusted on the respective screens independently. "4 Comparison screen" selects "screen before/after adjustment" whereby the setting prior to adjustment is applied to one of the divided screens or "default screen" which displays one of the divided screens with initial set values of the electronic apparatus. When the above described selection is finished, selecting "5 Item selection" transitions to the screen from which an adjustment is made.

The screen display and the operation when an actual screen adjustment is made will be explained using the flow chart in FIG. 4. In step 101, "brightness" is selected as the setting item. In step 102, the above described setting items are set to "YES" in "1 Divided display", "3 screens" in "2 Number of screens", "same" in "3 Comparison item" and "screen before/after adjustment" in "4 Comparison screen." A screen is displayed divided into 3 portions on the display section as shown in FIG. 3(A). A divided screen A is displayed with the setting (brightness 30 in this embodiment) which has been operating before adjustment. Divided screens B and C are also displayed with the same value. The divided screens each display an item name (here "brightness") and an adjustment value currently being adjusted. In step 103, the divided screen B is selected using a cursor 10 which indicates a selected divided screen. In step 104, a numerical value about the displayed setting item for the divided screen B is changed so as to obtain a desired state and confirmed based on the state of the divided screen A which displays a state before adjustment. In steps 105, 106, the divided screen C is selected just like the divided screen B and an adjustment is made. Adjustments are repeated until a desired screen is obtained and in step 107, it is judged whether or not to end the adjustment. After the adjustment is completed, when a desired state is obtained in any one of the divided screens A, B, C in step 108, the user moves the cursor to the divided screen which is in the desired state and performs a selection operation. In steps 109, 110,111, the divided display is canceled by performing a confirmation operation and the electronic apparatus is operated with the settings of the selected divided screen. For example, as shown in FIG. 3(B), the brightness of the divided screen B is set to 35 and the brightness of the divided screen C is set to 45, and when the user selects the state of the divided screen C and performs a confirmation operation, the division is canceled and the image is displayed with the brightness set to 45.

In Embodiment 1 in the above described configuration, one of the divided screens is displayed in the state operating before the adjustment and contrast and brightness or the like are adjusted on the other divided screen and it is possible to thereby easily compare the setting difference before and after the adjustment.

Furthermore, the embodiment uses a television receiver as the electronic apparatus, but the electronic apparatus is not particularly limited to this and it goes without saying that the present invention is applicable to a recording medium for a reproduction apparatus for data stored in a recording medium such as a DVD as the electronic apparatus. Furthermore, though the screen is divided into three screens, it is also possible to divide the screen into two or four or more screens and use one of them as the screen before adjustment. Furthermore, an adjustment value is expressed by a number, but expressing this by a bar can improve viewability. Moreover, it is possible to display one of the divided screens with default settings set as recommended values for operation settings of the electronic apparatus so that the user may use them as a standard for adjustment.

### [Embodiment 2]

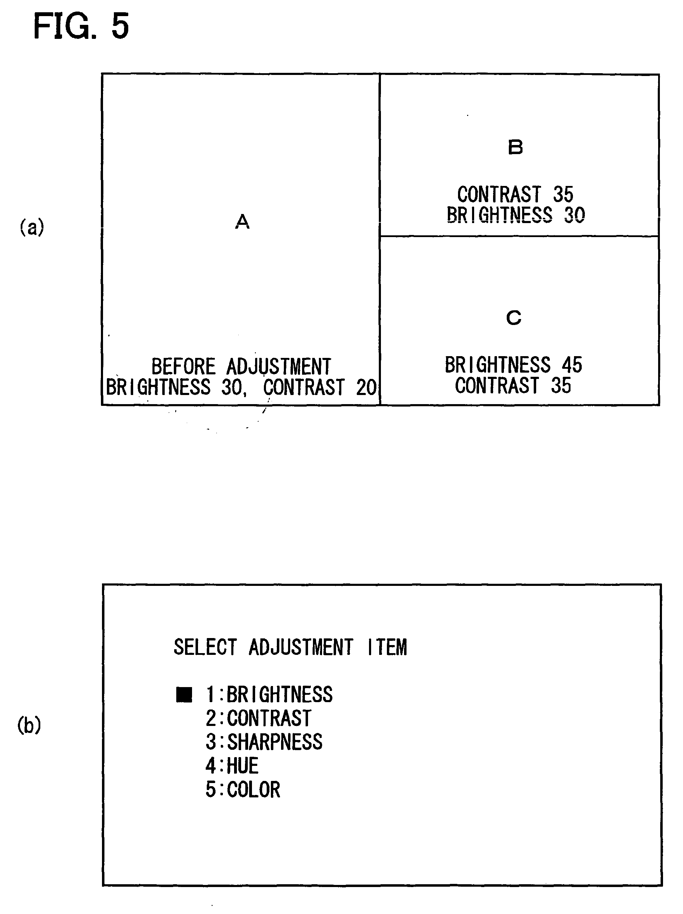

Next, Embodiment 2 of the present invention will be explained. The same parts as those in Embodiment 1 are assigned the same reference numerals and explanations of overlapping parts will be omitted and only different parts will be explained. Embodiment 1 has shown an example where divided screens are each adjusted about the same setting items, but this embodiment will explain a case where divided screens B and C are independent of each other and explain a method of setting a plurality of adjustment items using FIG. 5. When the divided screen B or C is selected by a cursor 10, an adjustment item selecting screen is automatically displayed so that the selected divided screen is displayed as shown in FIG. 5(B). When a desired item is selected, the item name and set value are displayed and the user changes the set value and performs a confirmation operation. Then, the screen of FIG. 5(B) is shown back, where items are further selected. When an adjustment to the divided screen is completed, a confirmation operation is performed and the screen of FIG. 5(A) is shown back. In such a case, changes of a plurality of items are added up and a divided screen is displayed. The divided screen shows a list of current set values, which makes a comparison of image quality and comparison of actual set values easier.

Embodiment 2 configured as shown above allows settings of a plurality of divided screens to be flexibly changed and allows a comparison of image qualitywhenmany items are changed to be made easily.

The effects of the present invention are as follows.

The adjustment effect confirmation function according to the first aspect of the present invention allows an electronic apparatus such as a television receiver or video/audio signal reproducing device such as a DVD (Digital Versatile Disk) reproducing device to display an inputted or read video/audio signal on a plurality of divided screens, decode the video/audio signal and display the image on the respective screens and adjust image quality through the control/judgment section for each of the multiple screens. This allows the user to compare image quality easily without changing the screen itself.

The adjustment effect confirmation function according to the second aspect of the present invention allows a plurality of adjustment items to be independently changed on the plurality of screens by adjusting image quality of the image displayed on the multiple screens, for example, adjusting contrast on a screen, adjusting brightness together with contrast on another screen, comparing the two screens and allows the state to be confirmed, thus allowing the user to easily set adjustment values that match the user's preferences.

An electronic apparatus provided with the adjustment effect confirmation function according to the third aspect of the present invention allows the user to easily adjust and set the image to desired image quality while comparing the plurality of screens.

## Claims

1. An adjustment effect confirmation function for an electronic apparatus provided with an input signal processing section which processes an inputted video/audio signal, a control/judgment section which adjusts various settings to the video/audio signal processed by the input signal processing section, a display section which outputs a video/audio signal adjusted by the control/judgment section and a storage section which stores various adjustment data, comprising:
a division instruction section which at least gives an instruction for dividing a display screen through a user's operation;
a division control section which divides the display screen into a number of divided screens specified by the instruction section; and
a screen control section which controls the division control section and the display section,
wherein image quality of each divided screen selected by the division control section can be adjusted by the control/judgment section.

2. The adjustment effect confirmation function according to claim 1, wherein the control/judgment section can adjust different items for a plurality of video/audio signals outputted to a divided screen which is displayed on the display section for each video/audio signal and reflects the adjustments in the video/audio signal outputted at any time.

3. An electronic apparatus comprising the adjustment effect confirmation function according to claim 1 or 2.
